# FASCICULE DE BREVET EUROPEEN

(11) **EP 2 328 767 B1**
(45) Date de publication et mention de la délivrance du brevet: **05.12.2012**
(21) Numéro de dépôt: 09747887.9
(22) Date de dépôt: 17.09.2009
(51) Int. Cl.: E05B 65/12, B60J 5/10, B60J 7/185, E05B 15/02, E05C 3/14, E05C 17/14

(54) **DISPOSITIF DE VERROUILLAGE D'OUVRANT POUR VEHICULE AUTOMOBILE**
VORRICHTUNG ZUM VERRIEGELN EINER ÖFFNUNGSPLATTE EINES KRAFTFAHRZEUGS
DEVICE FOR LOCKING AN OPENING PANEL OF A MOTOR VEHICLE

(30) Priorité: 30.09.2008 FR 0856596
(43) Date de publication de la demande: 08.06.2011
(73) Titulaire: Renault S.A.S., 92100 Boulogne-Billancourt (FR)
(72) Inventeur: LEROYER, Bruno, F-78910 Orgerus (FR)
(86) Numéro de dépôt international: PCT/FR2009/051752
(87) Numéro de publication internationale: WO 2010/037943

(56) Documents cités:
- EP-A1- 1 512 816
- FR-A- 2 695 596
- FR-A- 2 872 097
- FR-A- 2 876 959

## Description

La présente invention concerne un dispositif de verrouillage d'ouvrant pour véhicule automobile.

L'invention concerne plus précisément un dispositif de verrouillage d'un ouvrant de pavillon de véhicule automobile.

Certains véhicules automobiles, notamment des véhicules utilitaires, présentent une ouverture ménagée dans la zone arrière du pavillon et pouvant être obturée par un ouvrant. Cet ouvrant est alors appelé girafon, et permet, lorsqu'il est ouvert, de pouvoir placer dans le véhicule des charges longues, par exemple des planches, dépassant ainsi à l'arrière du véhicule au travers de l'ouverture du girafon. Pour des raisons de sécurités, le girafon doit comporter un dispositif de verrouillage qui permet de maintenir en position ouverte ledit ouvrant, en plus d'un dispositif de verrouillage classique permettant de maintenir l'ouvrant en position fermée.

Le document FR2876959 propose ainsi un ouvrant de véhicule, du type girafon, monté mobile en déplacement entre une position fermée et une position ouverte. Cet ouvrant comporte, d'une part, une partie avant montée pivotante par rapport à un axe monté transversalement et mobile en translation longitudinale sur le pavillon, et d'autre part, une partie arrière montée pivotante par rapport à un axe monté transversalement mobile en rotation par rapport à un axe transversal fixe du véhicule au moyen d'un bras de guidage.

Afin d'assurer le verrouillage dans les positions ouverte et fermée, l'ouvrant comporte un dispositif de verrouillage, formé notamment d'un avaloir et d'un pêne muni d'une poignée d'actionnement, et solidaire de l'ouvrant. Ce dispositif de verrouillage est apte à s'accrocher soit à une gâche d'un élément de structure du véhicule, soit à une gâche d'un élément liant entre eux lesdits bras de guidage.

Cependant, un tel mécanisme de verrouillage oblige l'utilisateur à ouvrir le pêne pour l'introduction d'une des deux gâches dans l'avaloir. De plus, pour des raisons d'encombrement et d'esthétisme, le mécanisme peut ne pas comporter d'élément liant entre eux lesdits bras de guidage rendant impossible le verrouillage est position ouverte.

La présente invention a donc pour objet de fournir un dispositif de verrouillage amélioré afin de palier à ces inconvénients en proposant un ouvrant de pavillon pourvu d'un dispositif de verrouillage simple, facile à manipuler, et peu coûteux.

A cet effet l'invention propose un dispositif de verrouillage d'ouvrant pour véhicule automobile, mobile entre une position fermée dans laquelle l'ouvrant obture une ouverture du pavillon du véhicule, et une position ouverte dans laquelle l'ouvrant libère au moins partiellement l'ouverture, le dispositif de verrouillage comportant un verrou formé d'une base fixée sur l'ouvrant et comportant un avaloir apte à recevoir une première gâche dans la position fermée et une seconde gâche dans la position ouverte, au moins une des gâches étant montée mobile par rapport au verrou et par rapport au véhicule.

Cette invention permet avantageusement permet avantageusement de n'avoir qu'une seule gâche fixe par rapport au véhicule

Selon d'autres caractéristiques de l'invention, la gâche mobile peut être montée en rotation autour d'un axe transversale et/ou montée fixe par rapport à une bielle du mécanisme d'ouverture de l'ouvrant.

L'invention propose également un verrou monté dans le dispositif de verrouillage, qui peut comporter un pêne monté pivotant autour d'un axe sur la base de manière à pourvoir obturer l'avaloir, le pêne comprenant un premier bord convexe de manière à former un angle adapté avec la première trajectoire de la gâche mobile pour que l'effort de la gâche mobile sur le premier bord permette le pivotement du pêne autour dudit axe.

Le pêne peut également comprendre un second bord prolongeant le premier bord, le second bord étant convexe de manière à former un angle adapté avec la seconde trajectoire de l'autre gâche pour que l'effort de l'autre gâche sur le second bord permette le pivotement du pêne autour de son axe.

Une première paroi de l'avaloir peut être sensiblement tangente à la seconde trajectoire, et une seconde paroi de l'avaloir peut être sensiblement tangente à la première trajectoire.

D'autres caractéristiques et avantages de l'invention apparaîtront à la lecture de la description d'un exemple qui va maintenant en être fait en se référant aux dessins annexés, sur lesquels :
Les figures 1 et 2 sont des vues schématiques d'un pavillon de véhicule du type utilitaire comportant un girafon selon l'invention dans les positions respectivement fermée, et ouverte ;
Les figures 3 et 4 sont des vue en coupe longitudinale respectivement des figures 1 et 2, du girafon comportant le dispositif de verrouillage de l'invention ;
La figure 5 est un vue de dessous en perspective du dispositif de verrouillage de l'invention dans une position antérieure à la position fermée ;
La figure 6 est une vue en coupe longitudinale du verrou du dispositif de verrouillage de l'invention.

Dans la suite de la description, on définit par X, Y, Z les directions longitudinale, transversale et verticale du véhicule automobile. Sur les figures, la direction X est dirigée vers l'arrière du véhicule. Les termes avant et arrière se réfèrent respectivement à l'avant et l'arrière du véhicule.

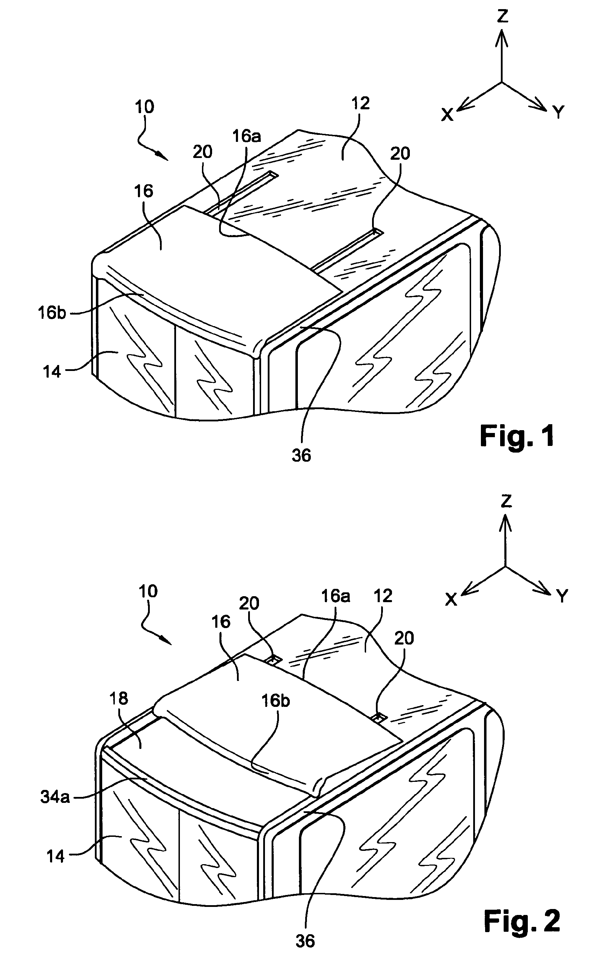

En référence aux figures 1 et 2, un véhicule automobile 10 comprend pavillon 12 et une face arrière formée dans cet exemple d'une porte battante arrière 14.

A proximité immédiate de la porte battante arrière 14, le pavillon est pourvu d'un ouvrant 16 qui obture une ouverture 18. Dans la position fermée représentée à la figure 1, l'ouvrant 16 s'étend dans la continuité du pavillon 12 au dessus de l'ouverture 18 qu'il obture complètement.

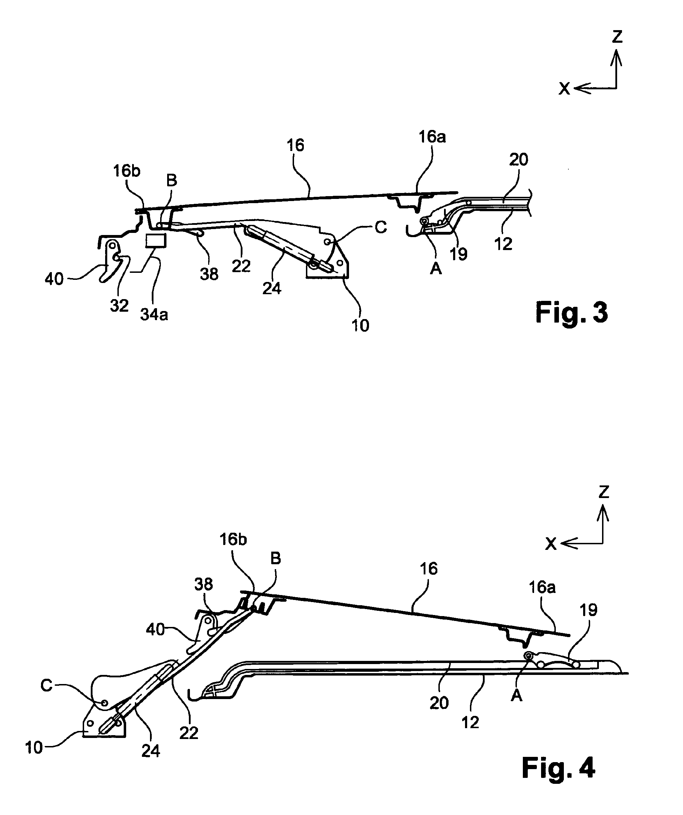

En référence aux figures 1 à 5, le bord transversal avant 16a de l'ouvrant 16 est monté en rotation autour d'un axe A sur deux chariots 19. Les chariots coulissent principalement suivant un mouvement de translation, chacun dans un rail 20 solidaire de la face supérieure du pavillon 12. Chaque rail 20 s'étend dans la direction longitudinale du véhicule depuis le bord transversal avant de l'ouverture 18 situé du côté avant du véhicule, sur une distance sensiblement identique à la dimension de l'ouvrant 16 dans la direction longitudinale, tel que représenté figure 4.

Les chariots 19 et les rails 20 forment ainsi des moyens de guidage en débattement principalement longitudinal de l'ouvrant aptes à le guider entre ses positions fermée et ouverte.

L'ouvrant 16 est articulé à l'extrémité d'une bielle 22, autour d'un axe B transversal au véhicule situé à proximité de son bord transversal arrière 16b. L'autre extrémité de la bielle 22 est articulée à la structure du véhicule autour d'un axe C également transversal au véhicule.

Chaque bielle 22 présente une distance d'axe à axe sensiblement égale à la moitié de la dimension de l'ouvrant 16 suivant la direction longitudinale du véhicule, et est articulée à l'ouvrant et à la structure du véhicule de manière à ce que, dans la position fermée, les axes d'articulation B et C de la bielle 22 soient disposés sensiblement dans un même plan horizontal. Un accès maximal à l'ouverture 18 est alors possible en position ouverte (figures 2 et 4). Les bielles 22 permettent ainsi un déplacement de l'ouvrant entre ses positions ouverte et fermée avec un débattement longitudinal.

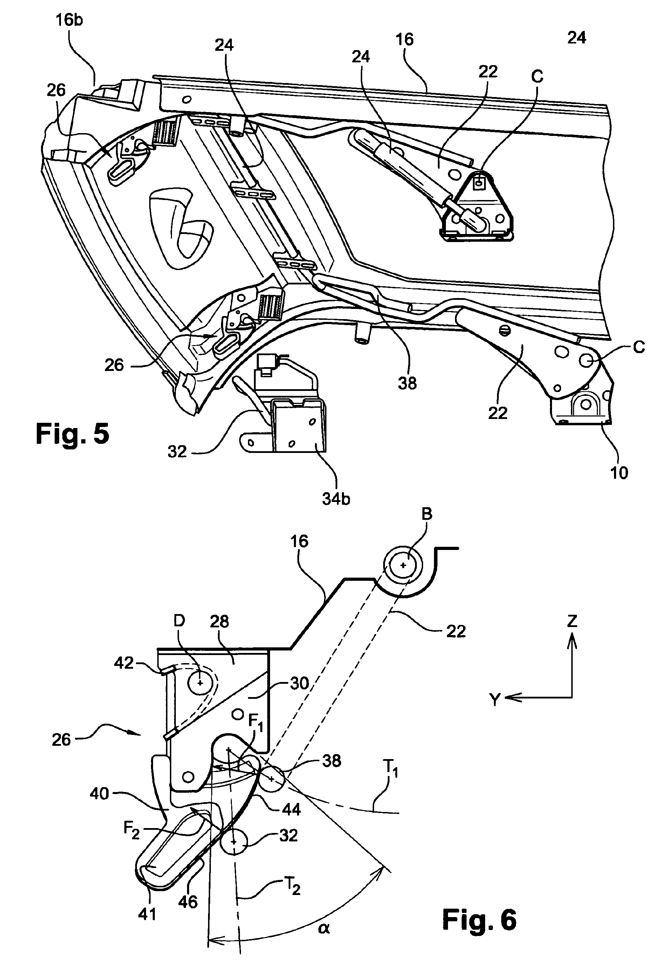

Les bielles 22 peuvent être reliées entre elles par un élément central 24 (figure 5) formant par exemple l'axe de rotation B de l'ouvrant par rapport aux bielles 22. L'ensemble formé par les bielles 22 et l'élément central 24 peut également être réalisé d'une seule et même pièce.

Un ou deux vérins d'assistance 24 à l'ouverture de l'ouvrant peuvent être reliés aux bielles 22 et au véhicule 10, de manière similaire aux vérins utilisés classiquement pour l'ouverture des hayons de véhicule.

Un dispositif de verrouillage de l'ouvrant permet le blocage en position fermée afin d'éviter toute intrusion dans le véhicule. Ce dispositif de verrouillage permet également le blocage en position ouverte afin d'éviter la fermeture intempestive de l'ouvrant lorsque le véhicule se déplace à grande vitesse.

En référence à la figure 6, le dispositif de verrouillage comporte un verrou 26 formé d'une base 28 fixée sur la face intérieure de l'ouvrant 16 entre le bord transversal arrière 16b de l'ouvrant 16 et l'axe de rotation B de l'ouvrant par rapport à la bielle 22. La base 28 comporte une encoche 30 formant l'avaloir de verrouillage apte à recevoir un fil de gâche d'orientation sensiblement transversale. La distance entre l'axe de l'avaloir 30 et l'axe de rotation B de l'ouvrant par rapport à la bielle 22 est sensiblement égale à la distance entre l'axe de rotation B et le second fil de gâche 38 fixé sur la bielle 22.

Un pêne 40 est monté pivotant sur la base 28 autour d'un axe D de manière à pourvoir obturer l'entrée de l'avaloir 30. Le pêne 40 comprend une zone de préhension 41 afin de pouvoir le faire pivoter manuellement de manière à libérer l'avaloir 30. Un moyen de rappel élastique 42, par exemple un ressort de rappel, est disposé entre la base 28 et le pêne 40 de manière à forcer le retour du pêne 40 en position d'obturation de l'entrée de l'avaloir 30.

En position fermée, le verrou 26 est en mesure de s'accrocher de manière réversible à un premier fil de gâche 32 solidaire d'un élément de structure (34a ou 34b) de la partie supérieure arrière de la carrosserie (figure 3), par exemple une traverse arrière de pavillon 34a qui sert classiquement de point d'ancrage supérieur pour la porte battante arrière 14 du véhicule automobile 10, ou sur une partie arrière 34b des brancards 36 du pavillon 12 du véhicule 10 dans le cas où ledit véhicule n'est pas muni de traverse arrière de pavillon.

En position ouverte, le dispositif de verrouillage 26 est apte à s'accrocher réversiblement à un second fil de gâche 38 solidaire d'une bielle 22. Dans cet exemple le second fil de gâche 38 est soudé transversalement sur la bielle 22 entre les axes d'articulation B et C de ladite bielle. Ainsi le mouvement du second fil de gâche 38 est lié à celui de l'ouverture de l'ouvrant et décrit une trajectoire circulaire autour de l'axe B par rapport à l'ouvrant 16.

D'autres configurations du second fil de gâche peuvent être possibles, par exemple, il peut être lié à un vérin d'assistance 24 ou tout autre mécanisme mobile par rapport à l'ouverture du girafon 16.

L'ouverture de l'ouvrant 16 est réalisée de la manière suivante. Le pêne 40 est pivoté par l'utilisateur en faisant levier sur la zone de préhension 41 dudit pêne 40 de manière à débloquer le premier fil de gâche 32 de l'avaloir 30. L'ouvrant est alors libéré de la partie arrière du véhicule 10. L'utilisateur, aidé des vérins d'assistance 24, entraîne le mouvement du girafon 16 suivant la cinématique définie par le mécanisme des bielles 22 et des chariots 19. Ainsi le bord transversal arrière 16b de l'ouvrant pivote autour de l'axe C, décrivant un arc de cercle vers l'avant du véhicule et entraînant le bord transversal avant 16a de l'ouvrant vers l'avant du véhicule par le coulissement des chariots dans les rails 20.

Lors de son arrivée en position complètement ouverte, le second fil de gâche 38 de la bielle 22 de l'ouvrant 16 entre en contact avec un premier bord 44 du pêne 40 du verrou selon une trajectoire circulaire autour de l'axe B de pivotement de l'ouvrant 16 par rapport à la bielle 22. Le premier bord 44 du pêne 40 est convexe de manière à former un angle adapté avec la trajectoire T1 du second fil de gâche pour que l'effort (représenté par la flèche F1) du second fil de gâche sur le premier bord 44 permette le pivotement du pêne autour de l'axe D, le second fil de gâche glissant le long du premier bord 44. Ainsi le pêne libère automatiquement l'avaloir 30 du verrou sans que l'utilisateur ne doive faire levier sur la zone de préhension du pêne 40. Une fois le second fil de gâche positionné dans l'avaloir 30, le pêne 40 revient en position de blocage sous l'effort du ressort de rappel 42.

La fermeture de l'ouvrant 16 est réalisée inversement à l'ouverture de la manière suivante. Le pêne 40 est pivoté par l'utilisateur en faisant levier sur la zone de préhension dudit pêne 40 de manière à débloquer le second fil de gâche 38 de l'avaloir 30. L'ouvrant est alors libéré. L'utilisateur aidé des vérins d'assistance 24 entraîne le mouvement du girafon suivant la cinématique définie par le mécanisme des bielles et des chariots. Ainsi le bord transversal arrière 16b de l'ouvrant pivote autour de l'axe C, décrivant un arc de cercle vers l'arrière du véhicule et entraînant le bord transversal avant 16a de l'ouvrant vers l'arrière du véhicule par le coulissement des chariots dans les rails 20.

Lors de son arrivée en position complètement fermée, un second bord 46 du pêne 40 prolongeant le premier bord 44 du pêne 40 du verrou entre en contact avec le premier fil de gâche 32 fixe par rapport au véhicule selon une trajectoire sensiblement circulaire autour de l'axe C de pivotement de la bielle 22 par rapport au véhicule 10. En effet les chariots étant quasiment en fin de course dans les rails 20, le bord transversal avant 16a est quasiment fixe et donc influe peu sur la trajectoire du bord transversal arrière 16b lors du verrouillage. Le second bord 46 du pêne 40 est également convexe de manière à former un angle adapté avec la trajectoire T2 du premier fil de gâche par rapport au pêne de manière à ce que l'effort (représenté par la flèche F2) du premier fil de gâche sur le second bord 46 permette le pivotement du pêne autour de l'axe D. Le premier fil de gâche glisse alors le long du second bord 46 puis le long du premier bord 44 également adapté de manière à ce que l'effort F2 permette le pivotement du pêne autour de l'axe D. Ainsi le pêne libère automatiquement l'avaloir 30 du verrou sans que l'utilisateur ne doive faire levier sur la zone de préhension du pêne 40. Une fois le premier fil de gâche 32 positionné dans l'avaloir 30 le pêne 40 revient en position de blocage sous l'effort du ressort de rappel 42.

Selon une caractéristique de l'invention, les parois de l'encoche formant l'avaloir 30 forme un angle α. En effet, la position du premier et second fils de gâche 32 ou 38 dans l'avaloir est identique lorsque l'ouvrant est verrouillé en position fermée ou ouverte, cependant pour satisfaire aux différentes trajectoires d'arrivée de chacun des fils de gâche dans l'avaloir 30, une première paroi de ce dernier doit être sensiblement tangente à la trajectoire T2 du second fil de gâche 38 pour le verrouillage de l'ouvrant en position ouverte c'est à dire une trajectoire circulaire autours de l'axe B, et une seconde paroi de l'avaloir 30 doit être sensiblement tangente à la trajectoire T1 du premier fil de gâche 32 pour le verrouillage de l'ouvrant en position fermée c'est à dire une trajectoire sensiblement circulaire autours de l'axe C.

Bien entendu, l'ouvrant peut être monté selon d'autre configuration, notamment de manière à s'ouvrir non plus vers l'avant du véhicule, mais vers l'arrière du véhicule. L'ouverture est alors plus éloignée de la paroi transversale arrière du véhicule. On peut également prévoir une seule bielle d'un seul côté de l'ouvrant lorsque la structure de ce dernier le permet.

Cette invention permet avantageusement de n'avoir qu'un seul fil de gâche fixe par rapport au véhicule. Ainsi cela permet une diminution du nombre de pièces du mécanisme, et une adaptation plus simple quelque soit la structure du véhicule, par exemple dans le cas où la structure rend impossible l'implantation d'un second fil de gâche fixe par rapport au véhicule.

De plus, l'invention apporte également plus de confort et de facilité d'utilisation en limitant les actions manuelles pour ouvrir ou fermer le verrou.

## Revendications

1. Verrou pour un ouvrant de véhicule automobile, le verrou comporte un pêne (40) monté pivotant autour d'un axe (D) sur une base (28) de manière à pourvoir obturer un avaloir (30) situé sur la base, **caractérisé en ce que** le pêne comprend un premier bord (44) convexe capable de coopérer avec une seconde gâche (38) appliquant un premier effort (F1) sur le premier bord permettant le pivotement du pêne autour son axe (D) de manière à libérer l'avaloir, et un second bord (46) prolongeant le premier bord (44), le second bord étant convexe et capable de coopérer avec une première gâche (32) appliquant un second effort (F2) sur le second bord permettant le pivotement du pêne autour de son axe (D) de manière à libérer l'avaloir.

2. Dispositif d'ouvrant (16) pour véhicule automobile (10), l'ouvrant étant pourvu d'un mécanisme d'ouverture de manière à être mobile entre une position fermée dans laquelle l'ouvrant obture une ouverture (18) du pavillon (12) du véhicule, et une position ouverte dans laquelle l'ouvrant libère au moins partiellement l'ouverture, le mécanisme d'ouverture de l'ouvrant comportant au moins une bielle (22) dont une première extrémité est apte à être articulée au véhicule autour d'un premier axe transversal fixe (C), et dont la seconde extrémité est articulée à l'ouvrant mobile autour d'un second axe transversal (B), l'ouvrant étant d'autre part apte à être monté pivotant autour d'un troisième axe transversal (A) mobile longitudinalement par rapport au pavillon, le dispositif est **caractérisé en ce qu'**il comporte un verrou (26) selon la revendication 1, la base (28) du verrou étant fixée sur l'ouvrant, et le pêne (40) coopère avec une première gâche (32) en arrivant dans la position fermée de l'ouvrant et une seconde gâche (38) en arrivant dans la position ouverte de l'ouvrant.

3. Dispositif d'ouvrant selon la revendication 2, **caractérisé en ce que** le premier bord (44) convexe du pêne (40) du verrou forme un angle adapté avec la première trajectoire (T1) de la seconde gâche (38) par rapport au pêne, pour que l'effort (F1) de la seconde gâche sur le premier bord permette le pivotement du pêne et la libération de l'avaloir du verrou.

4. Dispositif d'ouvrant selon une des revendications 2 ou 3, **caractérisé en ce que** le second bord (46) convexe du pêne du verrou forme un angle adapté avec la seconde trajectoire (T2) de la première gâche (32) par rapport au pêne, pour que l'effort (F2) de la première gâche sur le second bord permette le pivotement du pêne et la libération de l'avaloir du verrou.

5. Dispositif de verrouillage d'ouvrant selon les revendications 3 et 4, **caractérisé en ce qu'**une première paroi de l'avaloir (30) est sensiblement tangente à la seconde trajectoire (T2), et qu'une seconde paroi de l'avaloir (30) est sensiblement tangente à la première trajectoire (T1).

## Claims

1. A lock for a motor vehicle opening panel, the lock comprising a latch (40) mounted such that it can pivot about a pin (D) on a base (28) so as to be able to close off a throat (30) located on the base, **characterized in that** the latch includes a first convex edge (44) capable of engaging with a second striker (38) that applies a first force (F1) to the first edge in order to pivot the latch about its pin (D) so as to uncover the throat, and a second edge (46) that prolongs the first edge (44), the second edge being convex and capable of engaging with a first striker (32) that applies a second force (F2) to the second edge in order to pivot the latch about its pin (D) so as to uncover the throat.

2. A device for an opening panel (16) for a motor vehicle (10), the opening panel being provided with an opening mechanism such that it can move between a closed position, in which the opening panel closes off an opening (18) in the roof (12) of the vehicle, and an open position, in which the opening panel at least partially uncovers the opening, the opening mechanism of the opening panel comprising at least one link rod (22), a first end of which is able to be hinged to the vehicle about a first fixed transverse pin (C) and the second end of which is hinged to the opening panel such that it can move about a second transverse pin (B), the opening panel being also able to be mounted such that it can pivot about a third transverse pin (A) that can move longitudinally with respect to the roof, the device being **characterized in that** it comprises a lock (26) as claimed in claim 1, the base (28) of the lock being fixed to the opening panel, and the latch (40) engages with a first striker (32) when it moves into the closed position of the opening panel and with a second striker (38) when it moves into the open position of the opening panel.

3. The device for an opening panel as claimed in claim 2, **characterized in that** the first convex edge (44) of the latch (40) of the lock forms an appropriate angle with the first path (T1) of the second striker (38) witch respect to the latch, in order that the force (F1) of the second striker on the first edge pivots the latch and uncovers the throat in the lock.

4. The device for an opening panel as claimed in either of claims 2 and 3, **characterized in that** the second convex edge (46) of the latch of the lock forms an appropriate angle with the second path (T2) of the first striker (32) with respect to the latch, in order that the force (F2) of the first striker on the second edge pivots the latch and uncovers the throat in the lock.

5. The device for locking an opening panel as claimed in claims 3 and 4, **characterized in that** a first wall of the throat (30) is approximately tangent to the second path (T2), and **in that** a second wall of the throat (30) is approximately tangent to the first path (T1).

## Patentansprüche

1. Verriegelung für einen Öffnungsflügel eines Kraftfahrzeugs, wobei die Verriegelung eine Schließfalle (40) umfasst, die schwenkbar um eine Achse (D) an einer Basis (28) so angebracht ist, dass sie eine an der Basis befindliche Kehle (30) schließen kann, **dadurch gekennzeichnet, dass** die Schließfalle einen konvexen ersten Rand (44) aufweist, der mit einer zweiten Schließplatte (38) zusammenwirken kann, die eine erste Kraft (F1) an den ersten Rand anlegt, um das Schwenken der Schließfalle um ihre Achse (D) zu gestatten und so die Kehle freizulegen, sowie einen zweiten Rand (46), der den ersten Rand (44) verlängert, wobei der zweite Rand konvex ist und mit einer ersten Schließplatte (32) zusammenwirken kann, die eine zweite Kraft (F2) an den zweiten Rand anlegt, die das Schwenken der Schließfalle um ihre Achse (D) gestattet, um die Kehle freizulegen.

2. Öffnungsflügelvorrichtung (16) für ein Kraftfahrzeug (10), wobei der Öffnungsflügel mit einem Öffnungsmechanismus versehen ist, um zwischen einer geschlossenen Stellung, in der der Öffnungsflügel eine Öffnung (18) des Karosserieoberbaus des Fahrzeugs verschließt, und einer geöffneten Stellung, in der der Öffnungsflügel die Öffnung zumindest teilweise freilegt, beweglich zu sein, wobei der Öffnungsmechanismus des Öffnungsflügels mindestens eine Verbindungsstange (22) umfasst, von der ein erstes Ende um eine erste feststehende Querachse (C) am Fahrzeug angelenkt werden kann und von der das zweite Ende um eine zweite Querachse (B) am beweglichen Öffnungsflügel angelenkt ist, wobei der Öffnungsflügel andererseits schwenkbar um eine dritte bewegliche Querachse (A) in Längsrichtung bezüglich des Karosserieoberbaus angebracht werden kann, wobei die Vorrichtung **dadurch gekennzeichnet ist, dass** sie eine Verriegelung (26) nach Anspruch 1 umfasst, wobei die Basis (28) der Verriegelung an dem Öffnungsflügel befestigt ist und die Schließfalle (40) bei Erreichen der geschlossenen Stellung des Öffnungsflügels mit einer ersten Schließplatte (32) und bei Erreichen der geöffneten Stellung des Öffnungsflügels mit einer zweiten Schließplatte (38) zusammenwirkt.

3. Öffnungsflügelvorrichtung nach Anspruch 2, **dadurch gekennzeichnet, dass** der erste konvexe Rand (44) der Schließfalle (40) der Verriegelung einen geeigneten Winkel mit der ersten Bahn (T1) der zweiten Schließplatte (38) bezüglich der Schließfalle bildet, damit die Kraft (F1) der zweiten Schließplatte auf den ersten Rand das Schwenken der Schließfalle und die Freigabe der Kehle der Verriegelung gestattet.

4. Öffnungsflügelvorrichtung nach Anspruch 2 oder 3, **dadurch gekennzeichnet, dass** der zweite konvexe Rand (46) der Schließfalle der Verriegelung einen geeigneten Winkel mit der zweiten Bahn (T2) der ersten Schließplatte (32) bezüglich der Schließfalle bildet, damit die Kraft (F2) der ersten Schließplatte auf den zweiten Rand das Schwenken der Schließfalle und die Freigabe der Kehle der Verriegelung gestattet.

5. Vorrichtung zur Verriegelung eines Öffnungsflügels nach den Ansprüchen 3 und 4, **dadurch gekennzeichnet, dass** eine erste Wand des Kanals (30) im Wesentlichen tangential zur zweiten Bahn (T2) verläuft und eine zweite Wand der Kehle (30) im Wesentlichen tangential zur ersten Bahn (T1) verläuft.
